# DEMANDE DE BREVET EUROPEEN

(11) **EP 4 692 294 A1**
(43) Date de publication de la demande: **11.02.2026**
(21) Numéro de dépôt: 25193633.2
(22) Date de dépôt: 04.08.2025
(51) Int. Cl.: C12H 1/00, A23B 2/53

(54) **SYSTÈME UV-C ET PROCÉDÉ DE CONSERVATION DE VIN EN CUVES EN VIDANGE**

(30) Priorité: 06.08.2024 FR 2408697
(71) Demandeur: SAS OENOPROTECT, 11100 Narbonne (FR)
(72) Inventeur: CAPMAN, Xavier, 11700 MOUX (FR); DUTOUR, Nicolas, 34080 MONTPELLIER (FR)
(74) Mandataire: Santarelli

(57) **Abrégé**

La présente invention concerne un nouveau procédé de conservation des liquides alimentaires (1) en cuve (2) tel que le vin, ledit procédé comportant une étape de stockage d'un liquide alimentaire (1) dans une cuve (2) partiellement vidangée ou remplie, et dans laquelle on réalise :
-une étape de désinfection d'un espace de tête (3) de ladite cuve par irradiation de lumière UV au moyen d'un système UV-C (10), et dans laquelle l'espace de tête (3) est irradié en continu et sensiblement tout au long d'une durée de ladite étape de stockage.

Ce procédé permet de conserver efficacement le vin en présence d'air et en absence de produits chimiques lors de son stockage temporaire en attente de stockage optimale. L'invention concerne également un système UV-C spécialement conçu pour ce procédé.

## Description

### DOMAINE TECHNIQUE

La présente invention concerne un procédé de conservation de liquides alimentaires et un système UV-C. En particulier, l'invention propose de désinfecter en continu l'espace de tête de cuves en vidange au moyen d'un système UV-C, et éviter ainsi la dégradation du liquide alimentaire lors de son stockage en présence d'air. L'invention vise notamment la conservation du vin et un système UV-C spécialement conçu pour le monde de l'œnologie et de l'alimentaire.

### ETAT DE LA TECHNIQUE

En raison de leur activité germicide (destruction ou inactivation des micro-organismes), les UV-C sont utilisés dans un nombre croissant d'applications, par exemple en milieu médical et hospitalier pour stériliser les instruments, les plans de travail, etc. Ils sont également utilisés dans les installations de traitement des eaux usées, les systèmes de climatisation, les piscines, les aquariums, ainsi qu'à divers stades de certains procédés de fabrication d'aliments et de boissons.

Cependant, leur introduction au monde l'œnologie n'a pas encore été réussie. Des travaux de l'Institut Français de la Vigne et du Vin ont pourtant montré leur intérêt pour la stabilisation microbiologique des vins (François DAVAUX et al., Les UV-C : une alternative à la stabilisation microbiologique des mouts et des vins, Document de conférence, June 2011). Ces travaux démontrent l'efficacité des rayonnements UV-C dans la réduction significative de la charge microbienne dans le vin, ce qui suggère un potentiel pour améliorer la stabilisation microbiologique des vins sans l'utilisation de produits chimiques. En particulier, le vin est exposé aux rayonnements UV-C en étant fait circuler à travers d'un turbulateur composé par un tube corrugué en inox dans lequel est inséré un tube générateur UV-C dans une gaine de quartz, de sorte qu'une chambre de traitement de vin est créé dans l'espace entré le tube générateur UV-C et le tube corrugué en inox. Le vin traverse le turbulateur en flux continu, permettant ainsi aux rayonnements UV-C d'agir directement sur le liquide en mouvement. Les résultats suggèrent que l'exposition des vins à des doses contrôlées de rayonnements UV-C permet d'inactiver les levures, les moisissures et les bactéries, qui sont souvent responsables de la détérioration du vin et de la modification de ses caractéristiques organoleptiques. Cependant, cette méthode de traitement des vins en flux par UV-C n'a pas été approuvée par les autorités réglementaires (OIV) et reste donc une pratique non autorisée dans la production vinicole en Europe.

La conservation du vin est un problème de longue date, car les vins nécessitent une protection contre l'exposition à l'air pour maintenir leur qualité dans le temps. Diverses techniques et processus ont été développés pour relever ce défi majeur, et dont la règle de base est de faire correspondre le volume de vin à la capacité du récipient de stockage. Toutefois, à de multiples étapes de la vie du vin (fin de fermentation, en attente de malolactique, lors des assemblages, à la suite de retiraison) il est courant de devoir stocker du vin dans des conditions propices à l'oxydation, et notamment lorsque les cuves sont partiellement vidangées. L'une des solutions les plus répandues implique l'utilisation de mèches de soufre. Le soufre réagit avec l'oxygène gazeux, offrant ainsi une protection temporaire pour le vin. Cependant, la durée de cette protection est assez variable et il impossible de savoir jusqu'à quand le vin est toujours protégé. Cette solution entraîne aussi une augmentation de la teneur totale en dioxyde de soufre (SO₂) dans les vins. De plus, les effets nocifs pour l'utilisateur rendent son utilisation aujourd'hui de moins en moins pratiquée. Par conséquent, bien que les mèches de soufre puissent offrir une solution temporaire, elles ne sont pas idéales pour la conservation à long terme du vin. Cela souligne la demande continue pour des méthodes de conservation du vin plus efficaces et fiables.

La conservation du vin par l'emploi d'azote est une autre méthode envisageable, bien qu'elle requière l'utilisation de cuves hermétiquement scellées, impliquant ainsi généralement des cuves en acier inoxydable ou en acier, soit des cuves en béton avec une excellente étanchéité du chapeau. Cette technique nécessite un investissement spécifique, ainsi qu'une consommation importante d'azote, ce qui la rend adaptée à un nombre restreint de cuves, typiquement celles utilisées pour la vente directe au robinet, où le volume de vin diminue de façon régulière.

L'exemple des ballons de vinification Vinifair illustre une tentative de résoudre le problème de l'espace vide dans les cuves de vin. Cette méthode consiste à introduire un ballon en matériau plastique dans la cuve et à le gonfler afin de combler le volume manquant. Cependant, cette technique n'a pas connu un large déploiement, principalement en raison de la difficulté de manipulation des ballons, qui sont encombrants et susceptibles de s'user rapidement. De plus, l'adaptation de ces ballons aux différentes cuves n'est pas aisée, et leur nettoyage s'avère complexe, notamment en raison des plis qui peuvent se former une fois le ballon dégonflé, augmentant ainsi le risque d'introduction de microorganismes dans la cuve et compromettant la conservation du vin.

La solution largement adoptée pour la conservation du vin est la cuve à chapeau flottant, où un chapeau mobile s'ajuste au volume de vin et une chambre à air gonflable assure l'étanchéité. Cependant, le frottement de la chambre lors des mouvements du chapeau conduit fréquemment à des dommages, compromettant ainsi l'étanchéité. Ces incidents sont parmi les causes les plus courantes de détérioration du vin pendant sa conservation. Bien que le contrôle quotidien de la pression puisse atténuer ce problème, il ne le résout pas entièrement.

En outre, cette méthode nécessite des investissements considérables, souvent réalisés lors de la création ou du renouvellement des installations vinicoles, car elle implique le remplacement de l'équipement existant.

Il existe donc un réel besoin pour des nouvelles solutions de conservation de vin en vidange.

### EXPOSE DE L'INVENTION

La présente invention porte sur un nouveau procédé de conservation des liquides alimentaires, notamment du vin, ledit procédé comportant une étape de stockage du vin dans une cuve partiellement vidangée ou remplie, et dans laquelle on réalise :
- une étape de désinfection d'un espace de tête de ladite cuve par irradiation de lumière UV-C au moyen d'un système UV-C, et dans laquelle, l'espace de tête est irradié en

continu et sensiblement tout au long d'une durée de ladite étape de stockage. L'espace de tête de la cuve est donc soumis à une irradiation germicide continue par lumière UV-C émise par le système UV-C, ladite irradiation étant maintenue sensiblement pendant toute la durée de l'étape de stockage.

Avantageusement, l'irradiation en continu de l'espace de tête permet d'empêcher la contamination microbiologique du liquide alimentaire et de conserver ses propriétés organoleptiques, et ceci sans besoin d'une fermeture étanche de la cuve ni de stockage à basse température. Dans le cas de la conservation du vin, les tests montrent que ce procédé est capable de maintenir le vin jusqu'à plusieurs mois en cuves de vidange sans formation d'éthanal, ni d'acide acétique (acidité volatile), sans consommation anormale de SO₂, sans évolution microbiologique au cours de la conservation avec le dispositif en place ni perte significative des caractéristiques organoleptiques du vin.

En particulier, le système UV-C est introduit et maintenu en suspension au niveau de l'espace de tête lors de l'étape de désinfection, et de préférence positionné à un niveau intermédiaire de l'espace de tête. Le système UV-C est ainsi positionné pour repartir de manière homogène les rayonnements UV-C dans l'espace de tête, et avoir un effet de désinfection optimal.

L'invention propose également un système UV-C spécialement conçu pour la mise en œuvre du procédé de conservation de l'invention, et ladite étape de désinfection lors du stockage.

Ce système UV-C comporte notamment un châssis de protection, une lampe UV-C, et un connecteur électrique étanche, et est particulier en ce que :
- la lampe UV-C est intégrée de manière étanche à l'intérieur du châssis, et
- le châssis est réalisé dans un matériau non transparent, tel que l'acier inoxydable, et
- le châssis présente une forme sensiblement cylindrique et des faces ouvertes pour permettre aux rayonnements UV-C de traverser le châssis.

Ce système UV-C a été spécialement conçu pour être robuste et permettre une utilisation sécurisée dans un environnement humide. La lampe UV-C est donc intégrée et reliée à une source d'alimentation de manière étanche. D'autre part, la lampe UV-C est protégée des chocs physiques par le châssis. Le châssis, définit une sorte de cage entourant la lampe UV-C, mais permettant aux rayons UV-C de traverser le châssis pour désinfecter l'espace de tête. Il est ainsi possible de fabriquer le châssis à partir d'un matériau résistant et facile à nettoyer, notamment en acier inoxydable, un matériau autrement non transparent aux rayonnements UV-C.

Dans un mode de réalisation, le châssis est formé par deux plaques reliées entre elles par des tiges, lesdites plaques présentant de préférence une forme polygonale d'au moins trois côtés et comportant des ajoures. Cette forme polygonale facilite la pose stable de la lampe sur une surface d'appui, de préférence cette forme est hexagonale.

En ce qui concerne l'intégration de la lampe UV-C dans le châssis, ce dernier comporte une ouverture pour l'insertion de ladite lampe UV-C sur un côté dit proximal du châssis, et un support de fixation sur un côté opposé et distal du châssis, ladite lampe UV-C étant insérée dans une gaine de protection transparente réceptionnée dans ledit support, et reliée au connecteur électrique étanche d'un côté de l'ouverture, et de sorte que la lampe UV-C est maintenue centrée dans le châssis. Selon un mode de réalisation, l'ouverture du châssis est pourvue d'une paroi filetée sur laquelle est vissée ledit connecteur électrique.

Le système UV-C comporte en outre, un moyen de suspension en matériau inoxydable, de préférence choisi parmi une chainette en inox, et le châssis comporte un élément de suspension configuré pour maintenir la lampe UV-C en position horizontale lorsqu'elle est suspendue. L'élément de suspension est par exemple un anneau d'accroche pour la chainette.

Enfin, dans un mode de réalisation, le système UV-C de l'invention comporte un ballast au moyen duquel le connecteur électrique est relié à une source d'alimentation de manière filaire, ledit ballast intégrant un capteur de fonctionnement configuré pour mesurer le temps de fonctionnement de la lampe UV-C et pour signaler lorsque le temps de vie restant de la lampe UV-C est inférieur à un temps préconfiguré, et intégrant de préférence un voyant de fonctionnement, un voyant de disfonctionnement, et un bouton de réinitialisation dudit capteur de fonctionnement. Le ballast, en tant que composant séparé de la lampe UV-C, peut être placé dans un endroit sûr et facilement accessible pour l'entretien, tout en fournissant une alimentation stable et sécurisée à la lampe UV-C. Conçu avec un capteur de fonctionnement, il permet surveiller la durée de vie de la lampe UV-C et prévoir les remplacements avant que la lampe UV-C n'atteigne la fin de sa durée de vie utile. De même, elle intègre des fonctions de signalisation proactive, indicateurs visuels et facilité de réinitialisation pour assurer que la lampe UV-C permet d'irradier une lumière UV-C à action germicide.

D'autres caractéristiques et avantages de l'invention seront apparents à la lecture de la description qui suit d'un exemple non limitatif de réalisation de l'invention en référence aux dessins annexés.

### LISTE DE FIGURES

La fig. 1 illustre de manière schématique un procédé de conservation d'un liquide alimentaire dans une cuve partiellement vidangée par irradiation de lumière UV-C dans l'espace de tête de la cuve selon l'invention.
La fig. 2 illustre une vue en perspective d'un système UV-C selon un mode de réalisation préféré de l'invention.
La fig. 3 illustre une vue éclatée du système UV-C de la figure 2.

### DESCRIPTION DETAILLEE DE L'INVENTION

La présente invention concerne une nouvelle utilisation des rayonnements UV-C dans un procédé de conservation des liquides alimentaires, notamment du vin. De manière particulière, l'invention propose d'utiliser la lumière UV-C pour prévenir la dégradation microbiologique du vin lorsqu'il est stocké dans des cuves partiellement vidangées, et qu'il est donc exposé à un volume d'air important et propice à sa détérioration. L'invention trouve également une application pour la conservation en cuve de tout liquide alimentaire, et tel que les huiles, les jus de fruit, le lait etc.

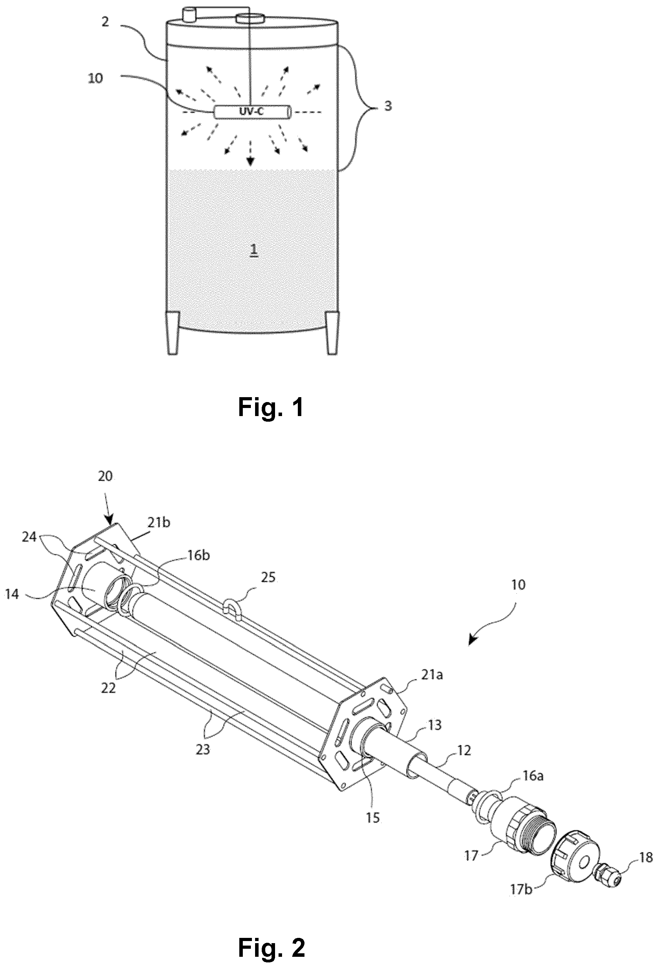

L'invention propose notamment un procédé de conservation des liquides alimentaires dans une cuve partiellement vidée ou remplie. Ce procédé est illustré schématiquement à la fig. 1 montrant une cuve 2 contenant un liquide alimentaire 1, ici du vin ayant été partiellement vidé de la cuve 2. Un volume vide est donc présente au-dessus d'une surface supérieure du niveau du liquide alimentaire, et étant référé comme espace de tête 3. Afin d'empêcher le développement des microorganismes responsables de la détérioration du vin, l'invention propose d'introduire un système UV-C 10 dans l'espèce de tête 3 et de mettre en œuvre une étape d'irradiation de lumière UV-C pour désinfecter l'espace de tête.

De manière particulière, l'invention propose d'irradier l'espace de tête en continu et tout au long d'une durée de stockage du vin. Par exemple, jusqu'à sa mise en bouteille ou dans des conditions de stockage optimales. Des essais ont montré que le procédé de l'invention est capable de maintenir le vin jusqu'à plusieurs mois en cuves de vidange à fermeture non étanche, et ceci sans formation d'éthanal, ni d'acide acétique (acidité volatile), sans consommation anormale de SO2, sans évolution microbiologique au cours de la conservation avec le dispositif en place ni perte significative des caractéristiques organoleptiques du vin.

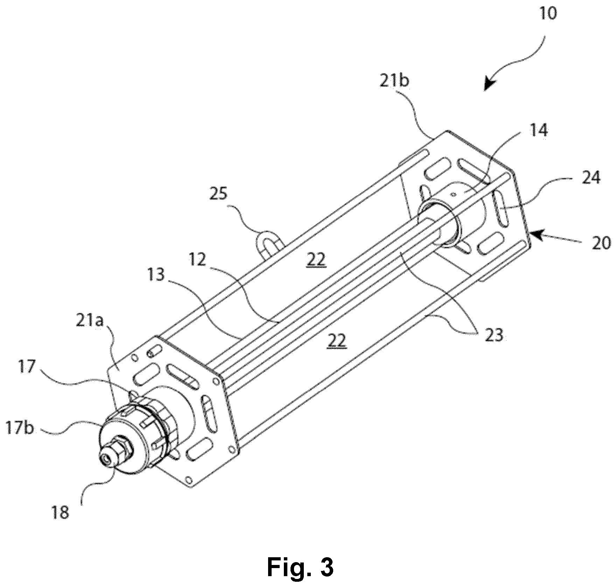

La figure 2 et la figure 3 illustrent un mode de réalisation d'un système UVC 10 spécialement conçu pour être robuste, hygiénique et apte à son utilisation dans des environnements humides. Ce système UV-C et donc optimal pour son utilisation dans le procédé de l'invention. Le système UV-C comporte un châssis 20 de protection construit dans un matériau robuste et facile à nettoyer, notamment en acier inoxydable. Le châssis est formé de deux plaques 21a, 21b polygonales reliées par des tiges 23 parallèles, créant une structure en forme de cage longitudinale avec des faces ouvertes 22 qui laissent passer les rayonnements UV-C.

Une lampe UV-C 12 est intégrée au centre du châssis dans une gaine 13 tubulaire de quartz transparent assurant la protection de la lampe et ne nuisant pas à la diffusion des UV-C. Dans la gaine 13, la lampe UV-C est insérée par une ouverture 15 sur la première plaque 21a d'un côté proximal du châssis, et est fixée par un support de montage 14 sur la plaque opposée 21b sur un côté distal du châssis. Un joint torique 16b assure la fixation étanche au niveau du support de montage 14 et d'une extrémité ovoïde de la gaine 13. De l'autre côté du châssis, l'ouverture est pourvue d'une paroi filetée sur laquelle est visée un connecteur électrique étanche 17 fermé par un bouchon femelle 17b, avec un joint torique d'un côté, et une presse étoupe de l'autre. Cette configuration garantit un fonctionnement sûr dans les environnements humides et un accès facile à la lampe pour son remplacement ou maintenance. Afin de renforcer la sécurité du système, le châssis peut intégrer également une prise de terre (non illustrée) sur le châssis.

En outre, le système comprend un élément de suspension 25, notamment un anneau 25 sur l'une des tiges du châssis positionné pour maintenir la lampe en position horizontale lorsqu'elle est suspendue, de préférence en position horizontale au moyen d'une chainette en inox.

La lampe UV-C est une lampe à vapeur de mercure basse pression (non générateur d'ozone) d'une puissance d'environ 20 W. Cette lampe est reliée de manière filaire à une source d'alimentation au moyen d'un ballast, permettant de garantir la bonne alimentation et fonctionnement de la lampe. Le ballast est un boitier détaché de la lampe (non illustré), relié d'un côté au connecteur électrique de la lampe au moyen d'une broche de liaison aux connecteurs amovibles pour faciliter la manipulation du système UV-C, et par un câble d'alimentation classique d'un côté de liaison avec le réseau électrique.

La lampe UV-C du système a une durée de vie d'environ 1 an, après duquel l'efficacité germicide va diminuer. Le ballast intègre donc un capteur de fonctionnement permettant de suivre le nombre de jours de fonctionnement de la lampe, et étant configuré pour donner un signal à l'utilisateur lorsqu'il est nécessaire de prévoir le changement de la lampe. Le ballast inclut également un témoin de fonctionnement, un témoin de disfonctionnement et un bouton de réinitialisation dudit capteur de fonctionnement. De préférence, le ballast est pourvu également d'une prise de terre pour sa liaison à la prise de la terre du châssis 20.

L'invention se distingue ainsi par son approche innovante qui permet une désinfection en continu de l'espace de tête de la cuve, empêchant le développement de microorganismes pendant toute la durée de stockage et préservant les propriétés organoleptiques du vin, ou tout autre liquide alimentaire sans consommation de gaz. Elle offre une solution pratique et économique, ne nécessitant pas de cuve étanche et pouvant être facilement mise en œuvre dans les installations existantes. La conception robuste et le châssis en acier inoxydable assurent la protection de la lampe UV-C et facilitent le nettoyage, tandis que le système de connecteur électrique étanche garantit une utilisation sécurisée même dans les environnements humides typiques des caves à vin. De plus, le ballast avec capteur de fonctionnement non seulement mesure le temps de fonctionnement de la lampe, mais permet également, grâce à un bouton de réinitialisation, une gestion simplifiée de la maintenance, signalant lorsque le temps de vie restant de la lampe est inférieur à un seuil prédéfini, ce qui contribue à la durabilité et à la facilité de surveillance du système.

## Revendications

1. Procédé de conservation de vin (1) en cuve (2), ledit procédé comportant une étape de stockage de vin (1) dans une cuve (2) partiellement vidangée ou remplie, et dans laquelle on réalise :
- une étape de désinfection d'un espace de tête (3) de ladite cuve par irradiation de lumière UV au moyen d'un système UV-C (10), et dans laquelle, l'espace de tête (3) est irradié en continu et tout au long d'une durée de ladite étape de stockage.

2. Procédé selon la revendication 1, dans lequel le système UV-C (10) est introduit et maintenu en suspension au niveau de l'espace de tête (3) lors de l'étape de désinfection, et de préférence ledit système UV-C est positionnée à un niveau intermédiaire de l'espace de tête (3).

3. Procédé selon l'une des revendications précédentes, dans lequel le système UV-C comporte un châssis (20) de protection, une lampe UV-C (12), un connecteur électrique étanche (17), et dans lequel :
- la lampe UV-C (12) est intégrée de manière étanche à l'intérieur du châssis (20), et
- le châssis (20) est réalisé dans un matériau non transparent, tel que l'acier inoxydable, et
- le châssis (20) présente une forme cylindrique et des faces ouvertes pour permettre aux rayonnements UV-C de traverser le châssis (20).

4. Procédé selon la revendication 3, dans lequel le châssis est formé par deux plaques (21a, 21b) reliées entre elles par des tiges (23), lesdites plaques (21a, 21b) présentant de préférence une forme polygonale d'au moins trois côtés et comportant des ajoures (24).

5. Procédé selon l'une des revendications 3 à 4, dans lequel le châssis (20) comporte une ouverture (15) pour l'insertion de ladite lampe UV-C (12) sur un côté dit proximal du châssis (20) et un support (14) de fixation sur un côté opposé et distal du châssis, ladite lampe étant insérée dans une gaine (13) de protection transparente réceptionnée dans ledit support, et reliée au connecteur électrique (17) étanche d'un côté de l'ouverture (15), et de sorte que la lampe UV-C (12) est maintenue centrée dans le châssis.

6. Procédé selon l'une des revendications 3 à 6, dans lequel le système UV-C (10) comporte un moyen de suspension en matériau inoxydable, de préférence choisi parmi une chainette en inox, et le châssis (20) comporte un élément de suspension (25) configuré pour maintenir la lampe en position horizontale lorsqu'elle est suspendue.

7. Procédé selon l'une des revendications précédentes, dans lequel le système UV-C comporte un ballast détaché de la lampe UV-C, et au moyen duquel le connecteur électrique est relié à une source d'alimentation de manière filaire, ledit ballast intégrant un capteur de fonctionnement configuré pour mesurer le temps de fonctionnement de la lampe UV-C et pour signaler lorsque le temps de vie restant de la lampe UV-C est inférieur à un temps préconfiguré, et de préférence un voyant de fonctionnement, un voyant de disfonctionnement, et un bouton de réinitialisation dudit capteur de fonctionnement.

8. Système UV-C pour la conservation des liquides alimentaires en cuves de vidange, tel que le vin, ledit système comportant un châssis (20) de protection, une lampe UV-C (12), un connecteur électrique étanche (17), et, **caractérisé en ce que** : - la lampe UV-C (12) est intégrée de manière étanche à l'intérieur du châssis (20), et
- le châssis (20) est réalisé dans un matériau non transparent, tel que l'acier inoxydable, et
- le châssis (20) présente une forme cylindrique et des faces ouvertes (22) pour permettre aux rayonnements UV-C de traverser le châssis (20).

9. Système UV-C selon la revendication 8, dans lequel le châssis (20) est formé par deux plaques (21a, 21b) reliées entre elles par des tiges (23) parallèles, lesdites plaques (21a, 21b) présentant de préférence une forme polygonale avec au moins 3 côtés et comportant des ajoures (24).

10. Système UV-C selon l'une des revendications 8 à 9, dans lequel dans lequel le châssis (20) comporte une ouverture (15) pour l'insertion de ladite lampe UV-C (12) sur un côté dit proximal du châssis et un support (14) de fixation sur un côté opposé et distal du châssis, ladite lampe UV-C (12) étant insérée dans une gaine (13) transparente réceptionnée dans ledit support (14), et reliée au connecteur électrique (17) étanche d'un côté de l'ouverture (15), et de sorte que la lampe est maintenue centrée dans le châssis.

11. Système UV-C selon la revendication 10, dans lequel l'ouverture (15) du châssis (20) est pourvue d'une paroi filetée sur laquelle est visée ledit connecteur électrique (17).

12. Système UV-C selon l'une des revendications 8 à 11, dans lequel la lampe comporte un moyen de suspension en matériau inoxydable, de préférence choisi parmi une chainette en inox, et le châssis comporte un élément de suspension (25) configuré pour maintenir la lampe UV-C (12) en position horizontale lorsqu'elle est suspendue.

13. Système UV-C selon l'une des revendications 8 à 12, ledit système UV-C comportant en outre un ballast détaché de la lampe UV-C (12), et au moyen duquel le connecteur électrique est relié à une source d'alimentation de manière filaire ledit ballast intégrant un capteur de fonctionnement configuré pour mesurer le temps de fonctionnement de la lampe UV-C (12) et pour signaler lorsque le temps de vie restant de la lampe UV-C (10) est inférieur à un temps préconfiguré, et comportant de préférence un voyant de fonctionnement, un voyant de disfonctionnement, et un bouton de réinitialisation dudit capteur de fonctionnement.
